# EUROPEAN PATENT APPLICATION

(11) **EP 1 850 236 A1**
(43) Date of publication of application: **31.10.2007**
(21) Application number: 06712735.7
(22) Date of filing: 31.01.2006
(51) Int. Cl.: G06F 13/00, H04L 29/10

(54) **COMMUNICATION CONTROL APPARATUS**

(30) Priority: 18.02.2005 JP 2005042755; 29.08.2005 JP 2005248482
(71) Applicant: Duaxes Corporation, Chiyoda-ku Tokyo, 100-6014 (JP)
(72) Inventor: NAGOYA, Mitsugu, Tokyo 173003 (JP); SUZUKI, Atsushi, wa, 2240035 (JP)
(74) Representative: Palmer, Jonathan R.
(86) International application number: PCT/JP2006/301592
(87) International publication number: WO 2006/087908

(57) **Abstract**

The present invention provides a technique for improving the security of access to contents.

A virus/phishing site list 161 contains a list of URLs of phishing sites, which masquerade as valid websites and are provided with an attempt to acquire private information including card numbers, PIN numbers and passwords, from users illegally. When a communication control unit 2 receives, via a network, a packet that contains communication data for requesting access to a content, a search circuit 30 compares the URL of the content to be accessed included in the communication data, with URLs of phishing sites included in the virus/phishing site list 161, regardless of the need for access control of the communication data. If the address of the content to be accessed matches a URL of a phishing site, a process execution circuit 40 will prohibit the access to the content.

## Description

### [Technical Field]

The present invention relates to a communication control technique, particularly to a communication control apparatus for preventing access to illegal or inappropriate web pages.

### [Background Art]

Due to improved Internet infrastructures and the widespread of communication terminals, such as cellular phone terminals, personal computers, and VoIP (Voice over Internet Protocol) phone sets, the number of Internet users is now exploding. Under such circumstances, security problems such as computer viruses, hacking and spam mails have become apparent, requiring appropriate techniques for communication control.

The Internet has enabled easy access to a vast amount of information. On the other hand, harmful information is proliferating thereon and regulation on its originator does not keep up with the proliferation. To provide an environment where everyone can use the Internet safely and effectively, there is required an appropriate technique for controlling access to harmful contents.

For example, there has been proposed an access control technique in which are prepared databases containing lists of sites to which access is permitted or prohibited, forbidden keywords or useful keywords, so as to control access to external information via the Internet with reference to such databases (see Patent Document 1, for example).
[Patent Document 1] Japanese Patent Application Laid-open No. 2001-282797.

### [Disclosure of Invention]

### [Problem to be Solved by the Invention]

Besides access control for harmful contents, measures against phishing fraud have been also required in recent years. Phishing is a fraud that sends to users e-mails containing links to "trap sites", which masquerade as the sites of real banks or credit card companies, or shopping sites. The fraudster attempts to direct users to such "trap site" via the link and prompt them to enter their credit card numbers or passwords thereon, so as to acquire such information illegally. The victims of phishing have rapidly increased recently, but countermeasures thereto are not considered sufficient.

If a user receives an e-mail containing a file with a virus or spyware embedded therein, or receives an HTML e-mail containing code to attack the vulnerability, antivirus software may detect and remove the virus as long as such software has been installed in user's terminal. However, used in phishing is a simple e-mail disguised as a normal one, so that antivirus software is unable to detect or remove the mail. Moreover, since many e-mails used for phishing present fake names or addresses in the sender fields (From), users, particularly those with little experience, may believe the names of real banks written in the sender fields and may be vulnerable to the traps.

A website that such link points to is also a simple web page and contains no "malicious attack code" that antivirus software can detect. There have been increasing cases using clever tricks, such as where a particular format for URLs is used to mislead a user into believing that the link points to a real domain name, or where the address bar in a pop-up window is hidden, causing an increasing number of "fished" victims. Further, more subtle tactics have been devised, such as faking the address bar using JavaScript (registered trademark), so that announcement or warning to users does not suffice to prevent the increasing damage caused by phishing.

There is an urgent need to develop a reliable technique for preventing access to phishing sites, without depending on users' awareness.

The present invention has been made in view of such situation, and a general purpose thereof is to provide a technique for improving the security of access to contents.

### [Means for Solving the Problem]

One aspect of the present invention relates to a communication control apparatus. The communication control apparatus comprises: a maintaining unit which maintains a list containing an address of a web page to which access should be restricted; a receiving unit which receives, via a network, communication data for requesting access to a content; a comparison unit which compares the address of the content included in the communication data, with the address of the web page to which access should be restricted included in the list; and an access control unit which prohibits access to the content when the address of the content matches the address of the web page to which access should be restricted, wherein communication data received by the receiving unit is processed by the comparison unit and the access control unit without the need for access control thereof being determined.

The web page to which access should be restricted may be a web page in a phishing site, which masquerades as a valid website and comprises an interface for prompting a user to enter information.

The receiving unit may further receive communication data to be transmitted to the request source of the access, and the comparison unit may then compare an address of a content included in the communication data, with an address of a web page to which access should be restricted included in the list. When the address of the content matches the address of the web page to which access should be restricted, the access control unit may prohibit the transmission of the communication data to the request source.

The receiving unit may be an antenna for transmitting to or receiving from a mobile terminal a signal via wireless communication.

Optional combinations of the aforementioned constituting elements, and implementations of the invention in the form of methods, apparatuses, systems, recording mediums and computer programs may also be practiced as additional modes of the present invention.

### [Advantageous Effects]

The present invention provides a technique for improving the security of access to contents.

### [Brief Description of the Drawings]

FIG. 1 is a diagram that shows a configuration of a communication control system according to a base technology.
FIG. 2 is a diagram that shows a configuration of a conventional communication control apparatus.
FIG. 3 is a diagram that shows a configuration of a communication control apparatus according to the base technology.
FIG. 4 is a diagram that shows an internal configuration of a packet processing circuit.
FIG. 5 is a diagram that shows an internal configuration of a position detection circuit.
FIG. 6 is a diagram that shows an example of internal data of a first database.
FIG. 7 is a diagram that shows another example of internal data of the first database.
FIG. 8 is a diagram that shows yet another example of internal data of the first database.
FIG. 9 is a diagram that shows a configuration of comparison circuits included in a binary search circuit.
FIG. 10 is a diagram that shows an example of internal data of a second database.
FIG. 11 is a diagram that shows another example of internal data of the second database.
FIG. 12 is a diagram that shows another illustrative configuration of the communication control apparatus according to the base technology.
FIG. 13 is a diagram that shows an internal configuration of the packet processing circuit used for URL filtering.
FIG. 14A is a diagram that shows an example of internal data of a virus/phishing site list; FIG. 14B is a diagram that shows an example of internal data of a whitelist; and
FIG. 14C is a diagram that shows an example of internal data of a blacklist.
FIG. 15 is a diagram that shows an example of internal data of a common category list.
FIGS. 16A, 16B, 16C and 16D are diagrams that show examples of internal data of the second database.
FIG. 17 is a diagram that shows the priorities of the virus/phishing site list, whitelist, blacklist and common category list.
FIG. 18 is a diagram that shows an illustrative arrangement of a communication control system according to the embodiment.
FIG. 19 is a diagram that shows another illustrative arrangement of the communication control system according to the embodiment.
FIG. 20 is a diagram that shows yet another illustrative arrangement of the communication control system according to the embodiment.
FIG. 21 is a diagram that shows still yet another illustrative arrangement of the communication control system according to the embodiment.
FIG. 22 is a diagram that shows still yet another illustrative arrangement of the communication control system according to the embodiment.
FIG. 23 is a diagram that shows a further illustrative arrangement of the communication control system according to the embodiment.

### [Explanation of Reference Numerals]

- 10: communication control apparatus
- 12: communication control unit
- 14: switch control unit
- 20: packet processing circuit
- 30: search circuit
- 32: position detection circuit
- 33: comparison circuit
- 34: index circuit
- 35: comparison circuit
- 36: binary search circuit
- 40: process execution circuit
- 50: first database
- 60: second database
- 100: communication control system
- 110: operation monitoring server
- 120: connection management server
- 130: message output server
- 140: log management server
- 150: database server
- 160: URL database
- 161: virus/phishing site list
- 162: whitelist
- 163: blacklist
- 164: common category list
- 220: virus/phishing site list providing server
- 260: cellular phone terminal
- 262: base station apparatus
- 264: control station apparatus
- 272: access point
- 274, 282 or 284: router apparatus

### [Best Mode for Carrying Out the Invention]

### (base technology)

First, as a base technology, a communication control apparatus will be described as an illustrative data processing apparatus, and the configurations of its peripheral apparatuses and the outline of the operation will be also explained. Thereafter, there will be described a URL filtering technique using the communication control apparatus before a technique for operating multiple communication control apparatuses will be described as an embodiment.

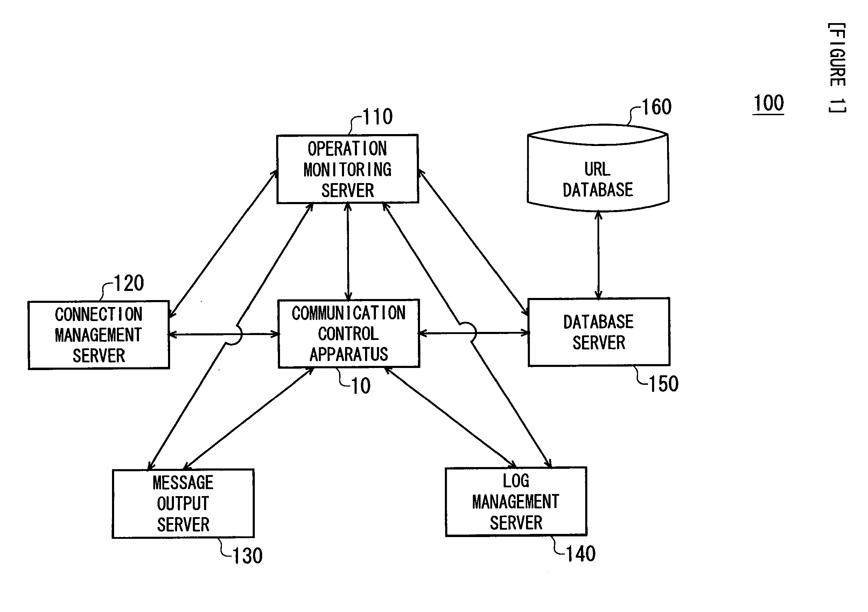

FIG. 1 shows a configuration of a communication control system according to the base technology. A communication control system 100 comprises a communication control apparatus 10 and various peripheral apparatuses provided to support the operation of the communication control apparatus 10. The communication control apparatus 10 of the base technology performs a URL filtering function provided by an Internet service provider or the like. The communication control apparatus 10 provided on a network path acquires a request for access to a content, analyzes the content, and determines whether or not the access to the content should be permitted. If the access to the content is permitted, the communication control apparatus 10 will transmit the access request to a server that retains the content. If the access to the content is prohibited, the communication control apparatus 10 will discard the access request and return a warning message or the like to the source of the request. The communication control apparatus 10 of the base technology receives an access request, such as an HTTP (HyperText Transfer Protocol) "GET" request message. The apparatus then searches a list of reference data for determining access permission to check if the URL of the content to be accessed appears in the list, so as to determine whether or not the access to the content should be permitted.

The peripheral apparatuses include an operation monitoring server 110, a connection management server 120, a message output server 130, a log management server 140 and a database server 150. The connection management server 120 manages connection to the communication control apparatus 10. When the communication control apparatus 10 processes a packet transmitted from a cellular phone terminal, for example, the connection management server 120 authenticates the user as a user of the communication control apparatus 10, based on information included in the packet, which uniquely identifies the cellular phone terminal. Once the user is authenticated, packets transmitted from the IP address, which is temporarily provided for the cellular phone terminal, will be transmitted to the communication control apparatus 10 and processed therein, without being authenticated by the connection management server 120 during a certain period. The message output server 130 outputs a message to the destination or the source of an access request, according to whether the communication control apparatus 10 has permitted the access. The log management server 140 manages the operating history of the communication control apparatus 10. The database server 150 acquires the latest database from a URL database 160 and provides the database to the communication control apparatus 10. To update the database without halting the operation of the communication control apparatus 10, the apparatus may possess a backup database. The operation monitoring server 110 monitors the operating status of the communication control apparatus 10 and its peripheral apparatuses including the connection management server 120, message output server 130, log management server 140 and database server 150. The operation monitoring server 110 has the highest priority in the communication control system 100 and performs supervisory control of the communication control apparatus 10 and all the peripheral apparatuses. The communication control apparatus 10 is configured with a dedicated hardware circuit, as will be described later. By inputting to or outputting from the communication control apparatus 10 the data for monitoring by means of a boundary-scan circuit, based on the technique described in Japanese Patent No. 3041340 filed by the present applicant or other techniques, the operation monitoring server 110 can monitor the operating status even while the communication control apparatus 10 is in operation.

In the communication control system 100 of the base technology, as will be described below, the communication control apparatus 10, configured with a dedicated hardware circuit for faster operation, is controlled by using a group of peripheral servers connected thereto and having various functions. Accordingly, by suitably replacing the software of the group of servers, a wide variety of functions can be achieved with a similar configuration. Thus, the base technology provides such communication control system having high flexibility.

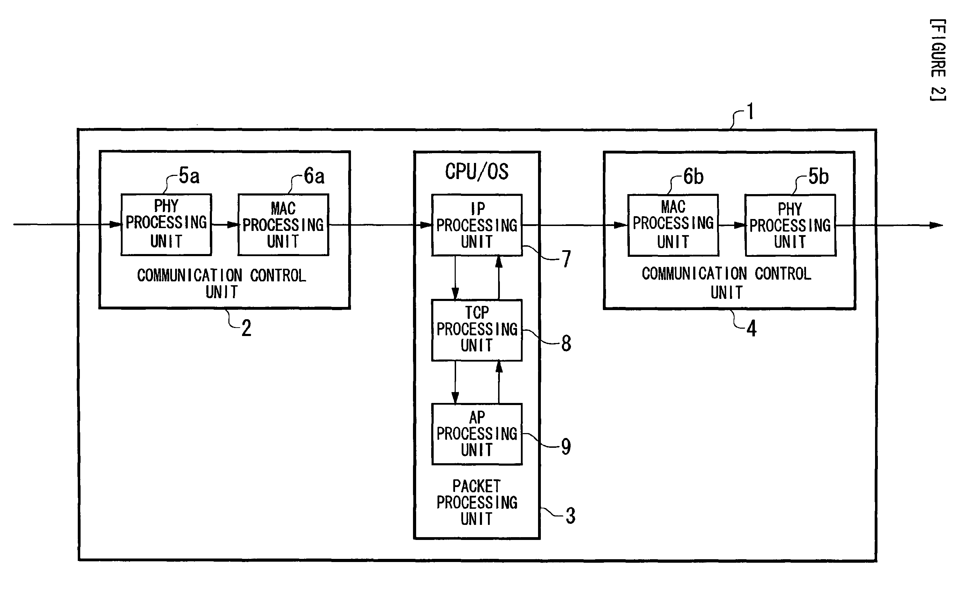

FIG. 2 shows a configuration of a conventional communication control apparatus 1. The conventional communication control apparatus 1 comprises a communication control unit 2 on the receiving side, a packet processing unit 3, and a communication control unit 4 on the sending side. The communication control units 2 and 4 include PHY processing units 5a and 5b for performing physical layer processing of packets, and MAC processing units 6a and 6b for performing MAC layer processing of packets, respectively. The packet processing unit 3 includes protocol processing units for performing protocol-specific processing, such as an IP processing unit 7 for performing IP (Internet Protocol) processing and a TCP processing unit 8 for performing TCP (Transport Control Protocol) processing. The packet processing unit 3 also includes an AP processing unit 9 for performing application layer processing. The AP processing unit 9 performs filtering or other processing according to data included in a packet.

The packet processing unit 3 of the conventional communication control apparatus 1 is implemented by software, using a general-purpose processor, or CPU, and an OS running on the CPU. With such configuration, however, the performance of the communication control apparatus 1 depends on the performance of the CPU, hampering the creation of a communication control apparatus capable of high-speed processing of a large volume of packets. For example, a 64-bit CPU can process only up to 64 bits at a time, and hence, there has existed no communication control apparatus having a higher performance than this. In addition, since the conventional communication control apparatus is predicated on the presence of an OS with versatile functionality, the possibility of security holes cannot be eliminated completely, requiring maintenance work including OS upgrades.

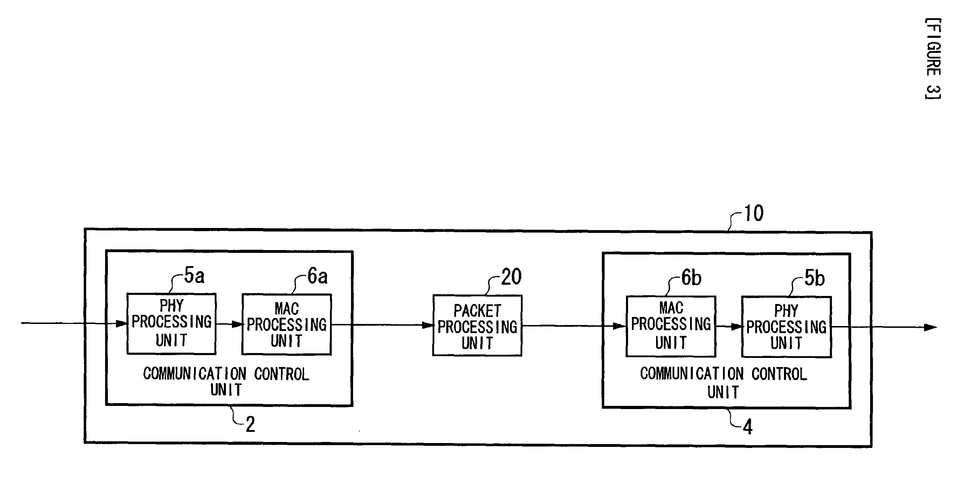

FIG. 3 shows a configuration of a communication control apparatus in the base technology. The communication control apparatus 10 comprises a packet processing circuit 20 configured with dedicated hardware employing a wired logic circuit, instead of the packet processing unit 3 implemented by software including a CPU and an OS in the conventional communication control apparatus 1 shown in FIG. 2. By providing a dedicated hardware circuit to process communication data, rather than processing it with an OS and software running on a general-purpose processing circuit such as CPU, the performance limitations posed by the CPU or OS can be overcome, enabling a communication control apparatus having high throughput.

For example, a case will be considered here in which, in packet filtering or the like, a search is conducted to check if the data in a packet includes reference data, which serves as criteria for filtering. When a CPU is used to compare the communication data with the reference data, there occurs a problem in that, since only 64-bit data can be compared at a time, the processing speed cannot be improved beyond such CPU performance. Since the CPU needs to repeat the process of loading 64 bits of communication data into a memory and comparing it with the reference data, the memory load time becomes a bottleneck which limits the processing speed.

In the base technology, by contrast, a dedicated hardware circuit configured with a wired logic circuit is provided to compare communication data with reference data. This circuit includes multiple comparators arranged in parallel, so as to enable the comparison of data having a length greater than 64 bits, such as 1024 bits. By providing dedicated hardware in such manner, bit matching can be simultaneously performed on a large number of bits in parallel. Since 1024-bit data can be processed at a time, while the conventional communication control apparatus 1 using a CPU processes only 64 bits, the processing speed can be improved remarkably. Increasing the number of comparators will improve the throughput, but also increase the cost and size of the apparatus. Accordingly, an optimal hardware circuit may be designed in accordance with the desired performance, cost or size. The dedicated hardware circuit may be configured using FPGA (Field Programmable Gate Array), etc.

Since the communication control apparatus 10 of the base technology is configured with dedicated hardware employing a wired logic circuit, it does not require any OS (Operating System). This can eliminate the need for the installation, bug fixes, or version upgrades of an OS, thereby reducing the cost and man-hours required for administration and maintenance. Also, unlike CPUs requiring versatile functionality, the communication control apparatus 10 does not include any unnecessary functions or use needless resources, and hence, reduced cost, a smaller circuit area or improved processing speed can be expected. Furthermore, again unlike conventional OS-based communication control apparatuses, the absence of unnecessary functions decreases the possibility of security holes and thus enhances the tolerance against attacks from malicious third parties over a network.

The conventional communication control apparatus 1 processes packets using software predicated on a CPU and an OS. Therefore, all packet data needs to be received before protocol processing is performed, and then the data is passed to an application. In contrast, since packet processing is performed by a dedicated hardware circuit in the communication control apparatus 10 of the base technology, all packet data needs not be received before starting the processing. Upon reception of necessary data, the processing can be started at any given point in time without waiting for the reception of subsequent data. For example, position detection processing in a position detection circuit, which will be described later, may be started at the time when position identification data for identifying the position of comparison target data is received. Thus, various types of processing can be performed in parallel without waiting for the reception of all data, reducing the time required to process packet data.

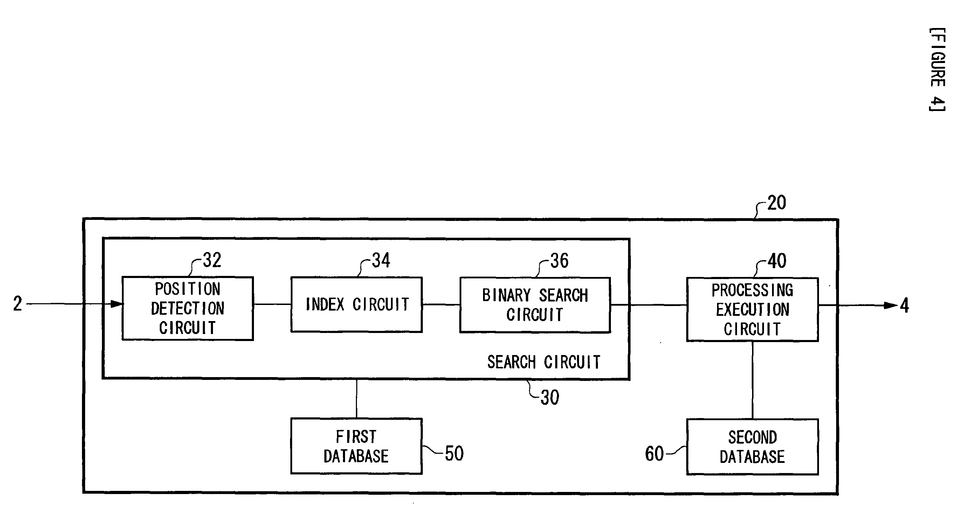

FIG. 4 shows an internal configuration of the packet processing circuit. The packet processing circuit 20 comprises: a first database 50 for storing reference data to be referred to when determining processing to be performed on communication data; a search circuit 30 for searching received communication data for the reference data by comparing the two; a second database 60 for storing a search result of the search circuit 30 and a content of processing to be performed on the communication data, which are related to each other; and a process execution circuit 40 for processing the communication data based on the search result of the search circuit 30 and the conditions stored in the second database 60.

The search circuit 30 includes: a position detection circuit 32 for detecting the position of comparison target data, which is to be compared with reference data, in communication data; an index circuit 34 which serves as an example of a determination circuit for determining which range the comparison target data belongs to, among three or more ranges into which the reference data stored in the first database 50 is divided; and a binary search circuit 36 for searching the determined range for the reference data that matches the comparison target data. The reference data may be searched for the comparison target data using any search technique, and a binary search method is used in the base technology.

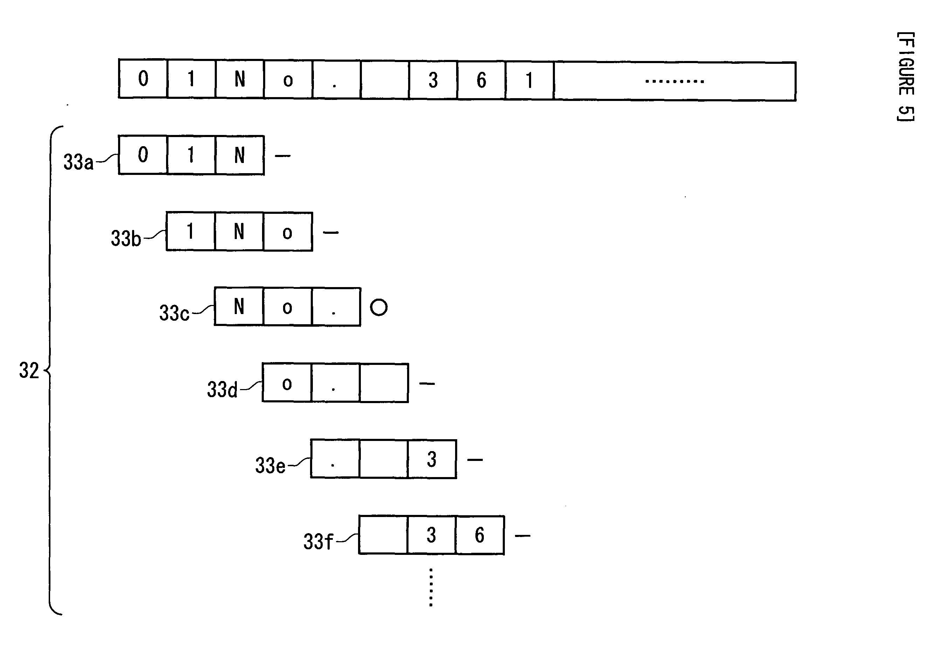

FIG. 5 shows an internal configuration of the position detection circuit. The position detection circuit 32 includes multiple comparison circuits 33a-33f which compare communication data with position identification data for identifying the position of comparison target data. While six comparison circuits 33a-33f are provided here, the number of comparison circuits may be arbitrary, as will be described later. To the comparison circuits 33a-33f are input pieces of communication data, with each piece shifted from the preceding one by a predetermined data length, such as 1 byte. These multiple comparison circuits 33a-33f then simultaneously compare the communication data with the position identification data to be detected in parallel.

The base technology will be described by way of example for explaining the operation of the communication control apparatus 10, in which a character string "No. ###" in communication data is detected, the number "###" included in the character string is then compared with reference data, and if the number matches the reference data, the packet will be allowed to pass, while, if they do not match, the packet will be discarded.

In the example of FIG. 5, communication data "01No. 361..." is input to the comparison circuits 33a-33f with a shift of one character each, and position identification data "No." for identifying the position of the number "###" is sought to be detected in the communication data. More specifically, "01N" is input to the comparison circuit 33a, "1No" to the comparison circuit 33b, "No." to the comparison circuit 33c, "o. " to the comparison circuit 33d, ". 3" to the comparison circuit 33e, and " 36" to the comparison circuit 33f. Then, the comparison circuits 33a-33f simultaneously perform comparisons with the position identification data "No.". Consequently, there is found a match with the comparison circuit 33c, indicating that the character string "No." exists at the third character from the top of the communication data. Thus, it is determined that the numeral data as comparison target data exists subsequent to the position identification data "No." detected by the position detection circuit 32.

When the same processing is performed by a CPU, since the comparison process needs to be serially performed one by one from the top, such as comparing character strings "01N" and "No." before comparing "1No" and "No.", no improvement of detection speed can be expected. In the communication control apparatus 10 of the base technology, in contrast, providing the multiple comparison circuits 33a-33f in parallel enables simultaneous parallel comparison processing, which could not have been performed by a CPU, improving the processing speed significantly. Providing more comparison circuits will improve the detection speed, as more characters can be compared simultaneously. In consideration of cost or size, a sufficient number of comparison circuits may be provided to achieve a desired detection speed.

Aside from detecting position identification data, the position detection circuit 32 may also be used as a circuit for detecting character strings for various purposes. Moreover, the position detection circuit 32 may be configured to detect position identification data in units of bits, not just as a character string.

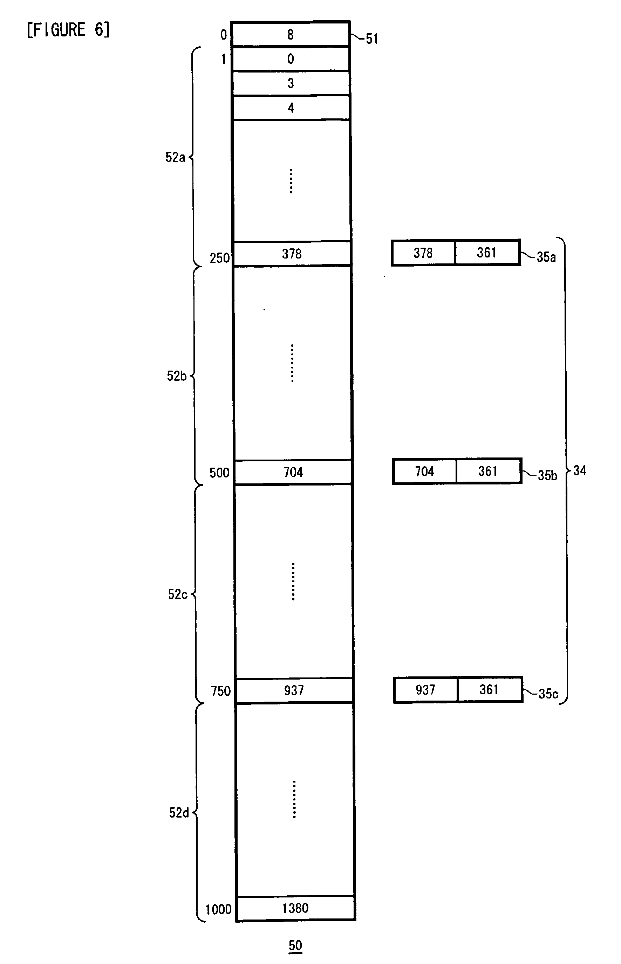

FIG. 6 shows an example of internal data of the first database. The first database 50 stores reference data to be referred to when determining the processing on packets, such as filtering, routing, switching, and replacement. The pieces of reference data are sorted according to some sort conditions. In the example of FIG. 6, 1000 pieces of reference data are stored.

The top record of the first database 50 contains an offset 51 which indicates the position of comparison target data in communication data. For example, in a TCP packet, the data configuration within the packet is determined in units of bits. Therefore, if the position of flag information or the like for determining the processing on the packet is given in the form of the offset 51, the processing can be determined by comparing only necessary bits, thus improving the processing efficiency. Also, even when the configuration of packet data is changed, it can be addressed by modifying the offset 51 accordingly. The first database 50 may store the data length of comparison target data. In this case, since the comparison can be performed by operating only a required number of comparators, the search efficiency can be improved.

The index circuit 34 determines which range the comparison target data belongs to, among three or more ranges, such as 52a-52d, into which reference data stored in the first database 50 is divided. In the example of FIG. 6, the 1000 pieces of reference data are divided into four ranges 52a-52d, i.e., 250 pieces each. The index circuit 34 includes multiple comparison circuits 35a-35c, each of which compares a piece of reference data at the border of the range with the comparison target data. Since the comparison circuits 35a-35c simultaneously compare the pieces of reference data at the borders with the comparison target data in parallel, which range the comparison target data belongs to can be determined by a single operation of comparison processing.

The pieces of reference data at the borders to be input to the comparison circuits 35a-35c of the index circuit 34 may be set by an apparatus provided outside the communication control apparatus 10. Alternatively, reference data at predetermined positions in the first database 50 may be set in advance to be input automatically as such. In the latter case, even when the first database 50 is updated, the reference data at the predetermined positions in the first database 50 are automatically input to the comparison circuits 35a-35c. Therefore, the communication control processing can be performed immediately without initialization or the like.

As mentioned previously, CPU-based binary search cannot make multiple comparisons at the same time. In the communication control apparatus 10 of the base technology, in contrast, providing the multiple comparison circuits 35a-35c in parallel enables simultaneous parallel comparison processing, with a significant improvement in the search speed.

After the index circuit 34 determines the relevant range, the binary search circuit 36 performs a search using a binary search method. The binary search circuit 36 divides the range determined by the index circuit 34 further into two and subsequently compares the piece of reference data lying at the border with the comparison target data, thereby determining which range the comparison target data belongs to. The binary search circuit 36 includes multiple comparison circuits for comparing, bit by bit, reference data with comparison target data. For example, in the base technology are provided 1024 comparison circuits to perform bit matching on 1024 bits simultaneously. When the range to which the comparison target data belongs is determined between the two split ranges, the determined range is further divided into two. Then, the reference data lying at the border is read out to be compared with the comparison target data. Thereafter, this processing is repeated to narrow the range further until reference data that matches the comparison target data is eventually found.

The operation will now be described in more detail in conjunction with the foregoing example. In the communication data shown in FIG. 5, the number "361" is the comparison target data that follows the position identification data "No.". Since a single space character intervenes between the position identification data "No." and the comparison target data "361", the offset 51 is set to "8" bits in order to exclude the space from the comparison target data. Accordingly, the binary search circuit 36 skips the first "8" bits, or 1 byte, of the communication data subsequent to the position identification data "No." and reads the following "361" as the comparison target data.

Each of the comparison circuits 35a-35c of the index circuit 34 receives "361" as comparison target data. As for reference data, the comparison circuit 35a receives "378", which lies at the border of the ranges 52a and 52b. Similarly, the comparison circuit 35b receives reference data "704" lying at the border of the ranges 52b and 52c, and the comparison circuit 35c receives reference data "937" lying at the border of the ranges 52c and 52d. The comparison circuits 35a-35c then perform comparisons simultaneously, determining that the comparison target data "361" belongs to the range 52a. Subsequently, the binary search circuit 36 searches the reference data for the comparison target data "361".

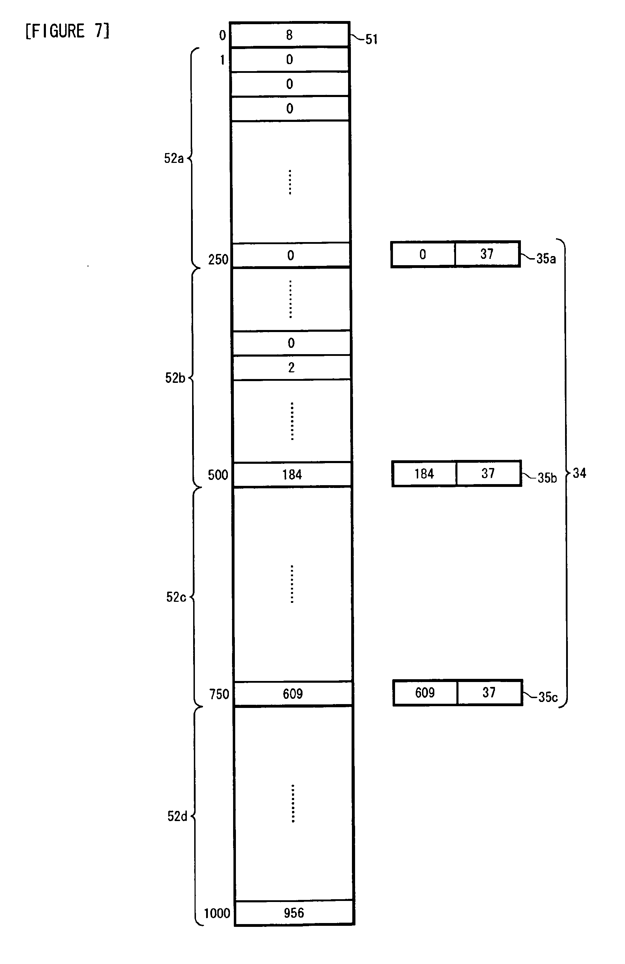

FIG. 7 shows another example of internal data of the first database. In the example shown in FIG. 7, the number of pieces of reference data is smaller than the number of pieces of data storable in the first database 50, i.e., 1000 in this case. In such instance, the first database 50 stores the pieces of reference data in descending order, starting with the last data position therein. Then, 0 is stored in the rest of the data positions. The database is loaded with data not from the top but from the bottom of the loading area, and all the vacancies occurring in the front of the loading area, if any, are replaced with zero. Consequently, the database is fully loaded at any time, so that the maximum time necessary for a binary search will be constant. Moreover, if the binary search circuit 36 reads reference data "0" during a search, the circuit can identify the range without making a comparison, as the comparison result is obvious, and can proceed to the next comparison. Consequently, the search speed can be improved.

In CPU-based software processing, the first database 50 stores pieces of reference data in ascending order, from the first data position therein. In the rest of data positions will be stored a maximum value or the like, and in such case, the skip of comparison processing as described above cannot be made during a binary search. The comparison technique described above can be implemented by configuring the search circuit 30 with a dedicated hardware circuit.

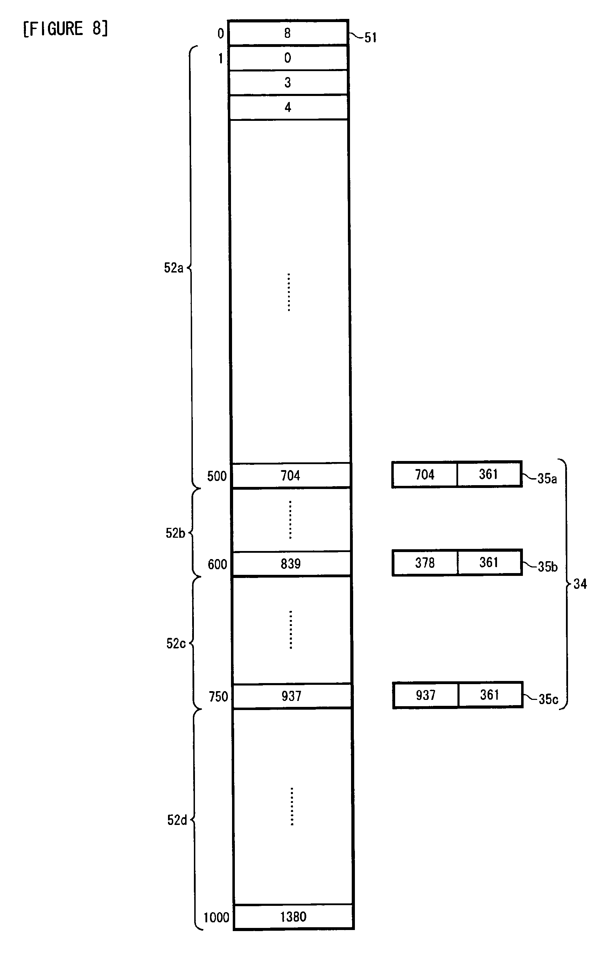

FIG. 8 shows yet another example of internal data of the first database. In the example shown in FIG. 8, the reference data is not evenly divided into three or more ranges, but unevenly divided into ranges that accommodate different numbers of pieces of data, such as 500 pieces in the range 52a and 100 pieces in the range 52b. These ranges may be determined depending on the distribution of frequencies with which reference data occurs in communication data. Specifically, the ranges may be determined so that the sums of the frequencies of occurrence of reference data belonging to the respective ranges are almost the same. Accordingly, the search efficiency can be improved. The reference data to be input to the comparison circuits 35a-35c of the index circuit 34 may be modifiable from the outside. In such case, the ranges can be dynamically set, so that the search efficiency will be optimized.

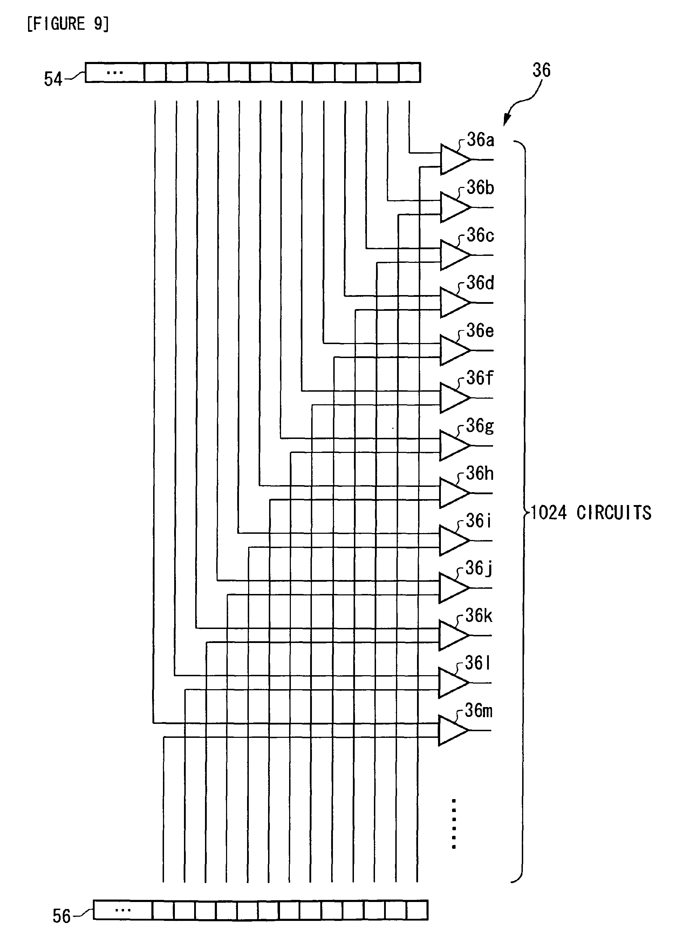

FIG. 9 shows a configuration of comparison circuits included in the binary search circuit. As mentioned previously, the binary search circuit 36 includes 1024 comparison circuits, such as 36a, 36b,.... Each of the comparison circuits 36a, 36b, etc. receives 1 bit of reference data 54 and 1 bit of comparison target data 56 to compare the bits in value. The comparison circuits 35a-35c of the index circuit 34 have similar internal configurations. Since the comparison processing is thus performed by a dedicated hardware circuit, a large number of comparison circuits can be operated in parallel to compare a large number of bits at a time, thereby speeding up the comparison processing.

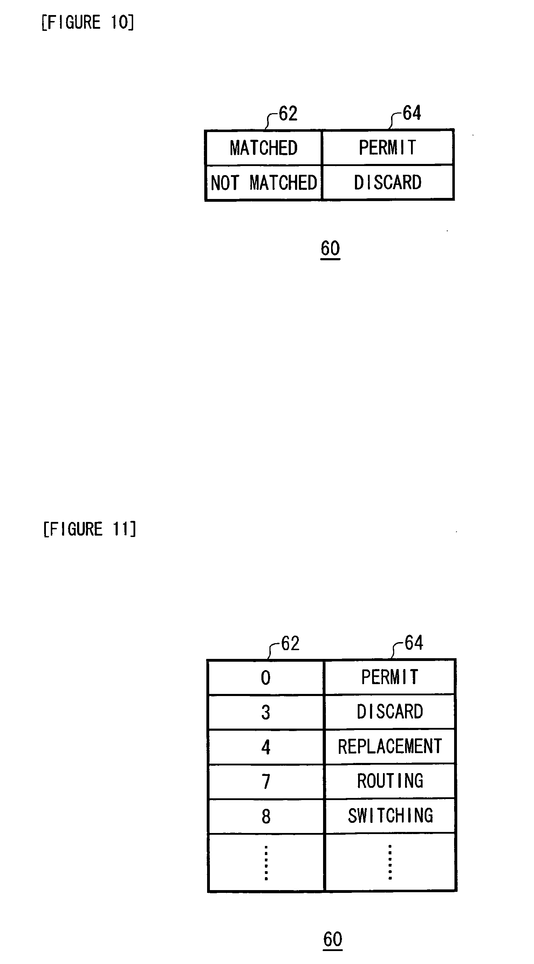

FIG. 10 shows an example of internal data of the second database. The second database 60 includes a search result field 62, which contains a search result of the search circuit 30, and a processing content field 64, which contains a processing content to be performed on communication data. The database stores the search results and the processing contents related to each other. In the example of FIG. 10, conditions are established such that a packet will be allowed to pass if its communication data contains reference data; if not, the packet will be discarded. The process execution circuit 40 searches the second database 60 for a processing content based on the search result and performs the processing on the communication data. The process execution circuit 40 may also be configured with a wired logic circuit.

FIG. 11 shows another example of internal data of the second database. In the example of FIG. 11, the processing content is set for each piece of reference data. With regard to packet replacement, replacement data may be stored in the second database 60. As for packet routing or switching, information on the route may be stored in the second database 60. The process execution circuit 40 performs processing, such as filtering, routing, switching, or replacement, which is specified in the second database 60, in accordance with the search result of the search circuit 30. When the processing content is set for each piece of reference data, as shown in FIG. 11, the first database 50 and the second database 60 may be merged with each other.

The first database and the second database are configured to be rewritable from the outside. By replacing these databases, various types of data processing and communication control can be achieved using the same communication control apparatus 10. Also, multistage search processing may be performed by providing two or more databases that store reference data to be searched. In such instance, more complicated conditional branching may be performed by providing two or more databases that store search results and processing contents related to each other. When multiple databases are thus provided to conduct multistage search, a plurality of the position detection circuits 32, the index circuits 34, the binary search circuits 36, etc. may also be provided.

The data intended for the foregoing comparison may be compressed by the same compression logic. If both the source data and the target data to be compared are compressed by the same method, the comparison can be performed in the same manner as usual, thus reducing the amount of data to be loaded for comparison. The smaller amount of data to be loaded can reduce the time required to read out the data from the memory, thereby reducing the overall processing time. Moreover, the number of comparators can be also reduced, which contributes to the miniaturization, weight saving, and cost reduction of the apparatus. The data intended for comparison may be stored in a compressed form, or may be read out from the memory and compressed before comparison.

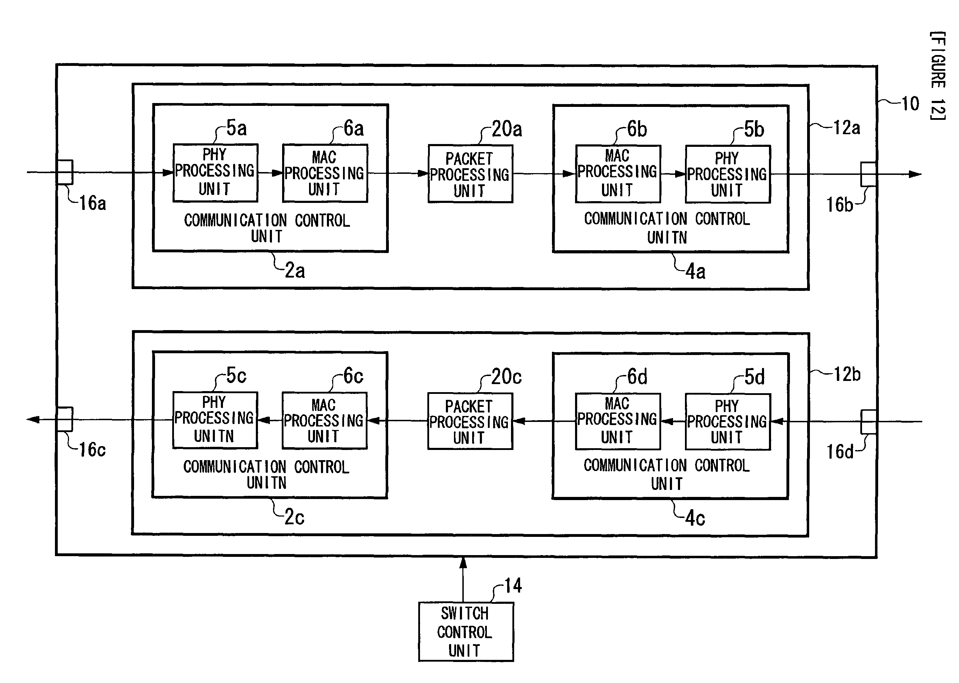

FIG. 12 shows another illustrative configuration of the communication control apparatus in the base technology. The communication control apparatus 10 shown in this diagram has two communication control units 12, each of which has the same configuration as the communication control apparatus 10 shown in FIG. 3. There is also provided a switch control unit 14 for controlling the operation of the individual communication control units 12. Each of the communication control units 12 has two input/output interfaces 16 and is connected to two networks, upstream and downstream, via the respective input/output interfaces 16. The communication control units 12 receive communication data from either one of the networks and output processed data to the other. The switch control unit 14 switches the inputs and outputs of the input/output interfaces 16 provided for the individual communication control units 12, thereby switching the directions of the flow of communication data in the communication control units 12. This allows communication control not only in one direction but also in both directions.

The switch control unit 14 may provide control such that: either one of the communication control units 12 processes inbound packets and the other processes outbound packets; both the units process inbound packets; or both the units process outbound packets. Consequently, the directions of communications to control can be changed depending on, for example, the traffic status or intended purpose.

The switch control unit 14 may acquire the operation status of the respective communication control units 12 and may switch the direction of communication control according thereto. For example, when one of the communication control units 12 is in a standby state and the other communication control unit 12 is in operation, the unit on standby may be activated as a substitute upon detection of the unit in operation stopping due to a failure or other reasons. This can improve the fault tolerance of the communication control apparatus 10. Also when one of the communication control units 12 needs maintenance such as a database update, the other communication control unit 12 may be operated as a substitute. Thus, appropriate maintenance can be performed without halting the operation of the communication control apparatus 10.

The communication control apparatus 10 may be provided with three or more communication control units 12. The switch control unit 14 may, for example, acquire the traffic status to control the direction of communications in the respective communication control units 12 so that more communication control units 12 are allocated for communication control processing in a direction handling higher traffic. This minimizes a drop in the communication speed, even when the traffic increases in one direction.

The plurality of communication control units 12 may share a part of the communication control unit 2 or 4. The units may also share a part of the packet processing circuit 20, too.

For the data processing apparatus stated above, the following aspects may be provided.

### [Aspect 1]

A data processing apparatus comprising:
a first memory unit which contains reference data to be referred to when determining contents of processing to be performed on acquired data;
a search section which searches the data for the reference data by comparing the data and the reference data;
a second memory unit which stores a result of search obtained by the search section and the contents of processing in association with each other; and
a processing section which performs the processing associated with the result of search on the data, based on the result of search, wherein
the search section is composed of a wired logic circuit.

### [Aspect 2]

The data processing apparatus of Aspect 1, wherein the wired logic circuit includes a plurality of first comparison circuits which compare the data with the reference data bit by bit.

### [Aspect 3]

The data processing apparatus of Aspect 1, wherein the search section includes a position detection circuit which detects in the data a position of comparison target data to be compared with the reference data.

### [Aspect 4]

The data processing apparatus of Aspect 3, wherein the position detection circuit includes a plurality of second comparison circuits which compare the data with position identification data for identifying the position of the comparison target data, and wherein the plurality of second comparison circuits receive the data, each having a shift of a predetermined data length, and compare the data with the position identification data simultaneously in parallel.

### [Aspect 5]

The data processing apparatus of Aspect 1 or 2, wherein the search section includes a binary search circuit which searches the data for the reference data by binary search.

### [Aspect 6]

The data processing apparatus of Aspect 5, wherein, when the number of pieces of the reference data is smaller than the number of pieces of data storable in the first memory unit, the reference data is stored in the first memory unit in descending order from the last data position, while 0 is stored in the rest of the data.

### [Aspect 7]

The data processing apparatus of any one of Aspects 1 to 6, wherein the search section includes a determination circuit which determines which range the comparison target data to be compared with the reference data pertains to, out of three or more ranges into which the plurality of pieces of reference data stored in the first memory unit are divided.

### [Aspect 8]

The data processing apparatus of Aspect 7, wherein the determination circuit include a plurality of third comparison circuits which compare reference data at borders of the ranges with the comparison target data so that the plurality of third comparison circuits determine which of the three or more ranges the comparison target data pertains to simultaneously in parallel.

### [Aspect 9]

The data processing apparatus of Aspect 8, wherein the reference data stored in predetermined positions of the first memory unit is input to the third comparison circuits as the reference data at the borders.

### [Aspect 10]

The data processing apparatus of Aspect 7 or 8, wherein the ranges are determined depending on a distribution of frequencies of occurrence of the reference data in the data.

### [Aspect 11]

The data processing apparatus of any one of Aspects 1 to 10, wherein the first memory unit further contains information that indicates the position of the comparison target data in the data, and wherein the search section extracts the comparison target data based on the position-indicating information.

### [Aspect 12]

The data processing apparatus of any one of Aspects 1 to 11, wherein the first memory unit or the second memory unit is configured to be rewritable from the outside.

### [Aspect 13]

The data processing apparatus of any one of Aspects 1 to 12, wherein, when the search section acquires data in a communication packet to be compared with the reference data, the search section starts comparing the data and the reference data without waiting for the acquisition of all data of the communication packet.

### [Aspect 14]

A data processing apparatus comprising a plurality of the data processing apparatuses of any one of Aspects 1 to 13, wherein the data processing apparatuses each have two interfaces which input and output data from/to communication lines, and the direction of processing of the data is changeably controlled by switching the inputs and outputs of the respective interfaces.

### (Embodiment)

Next, a URL filtering technique using the communication control apparatus 10 discussed above will be described. An embodiment proposes a reliable technique for preventing access to malicious websites including phishing sites or virus sites. The embodiment also proposes a technique for using such access control technique to construct a communication system with which users can enjoy network services safely.

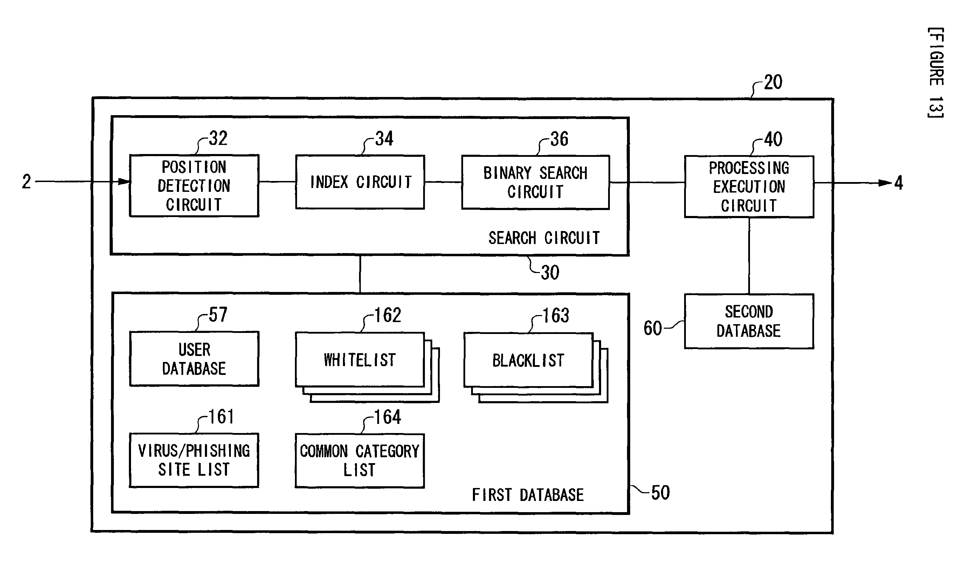

FIG. 13 shows an internal configuration of the packet processing circuit 20 used for URL filtering. The packet processing circuit 20 comprises, as the first database 50, a virus/phishing site list 161, a whitelist 162, a blacklist 163 and a common category list 164. After the communication control apparatus 10 acquires a request for access to a content, the URL of the content is checked against the virus/phishing site list 161, whitelist 162, blacklist 163 and common category list 164, in order to determine whether or not the access to the content should be permitted.

The virus/phishing site list 161 contains a list of URLs of contents containing computer viruses, and a list of URLs of "trap" sites used for phishing. If a URL is contained in the virus/phishing site list 161, the request for access to the content having such URL will be denied. Therefore, even when a user is about to access, unconsciously or by a trick, a virus site or phishing site, the access can be appropriately prohibited, thereby protecting the user from a virus or phishing fraud. Also, since the access restrictions are collectively provided by the communication control apparatus 10 on a communication path, not by a user terminal with a list of virus sites or phishing sites stored therein, more reliable and efficient access restrictions can be achieved. The communication control apparatus 10 may acquire and maintain a list of authenticated sites, which have been certified by certification authorities as valid and as not virus sites or phishing sites, to permit access to URLs contained in the list. Also, in a case where a valid website is hacked and a virus is embedded therein or the valid site is used for phishing, the operator of the valid site may register the URL of such hacked website in the virus/phishing site list 161, so as to temporarily prohibit the access to the website until the website is recovered. In addition to the URL list, other information such as IP numbers, TCP numbers and MAC addresses may be checked in combination. Accordingly, prohibition conditions can be set more accurately, thereby ensuring the filtering of virus sites or phishing sites.

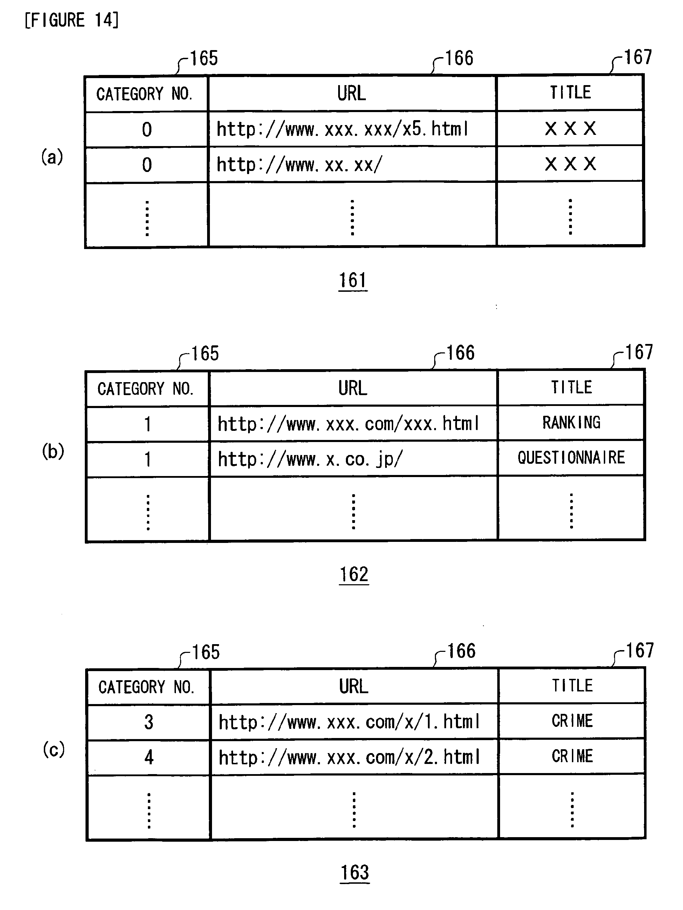

The whitelist 162 contains a list of URLs of contents to which access is permitted. The blacklist 163 contains a list of URLs of contents to which access is prohibited. FIG. 14A shows an example of internal data of the virus/phishing site list 161. Similarly, FIG. 14B shows an example of internal data of the whitelist 162, and FIG. 14C shows that of the blacklist 163. Each of the virus/phishing site list 161, whitelist 162 and blacklist 163 contains a category number field 165, a URL field 166 and a title field 167. The URL field 166 contains a URL of a content to which access is permitted or prohibited. The category number field 165 contains a category number of a content. The title field 167 contains a title of a content.

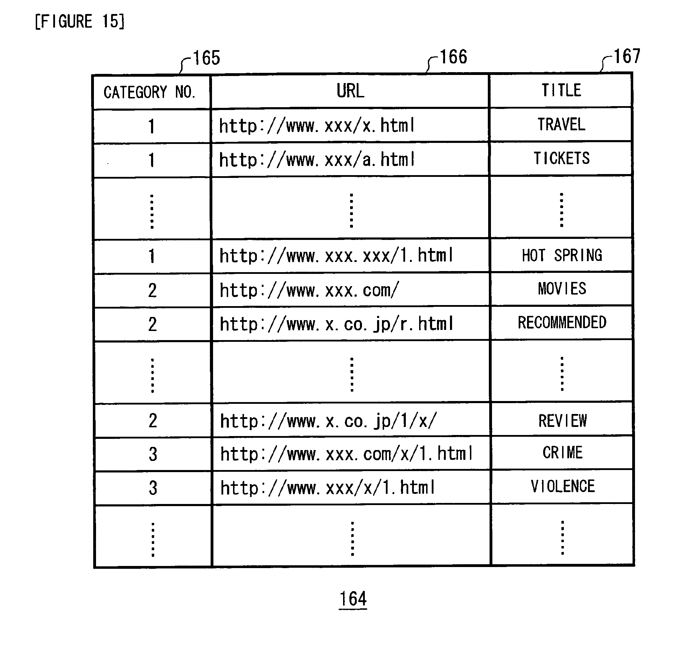

The common category list 164 contains a list for classifying contents represented by URLs into multiple categories. FIG. 15 shows an example of internal data of the common category list 164. The common category list 164 also contains the category number field 165, URL field 166 and title field 167.

The communication control apparatus 10 extracts a URL included in a "GET" request message or the like and searches the virus/phishing site list 161, whitelist 162, blacklist 163 and common category list 164 for the URL using the search circuit 30. At this time, a character string "http://", for example, may be detected by the position detection circuit 32 so as to extract the subsequent data string as target data. Then, the index circuit 34 and binary search circuit 36 perform matching between the extracted URL and the reference data in the virus/phishing site list 161, whitelist 162, blacklist 163 and common category list 164.

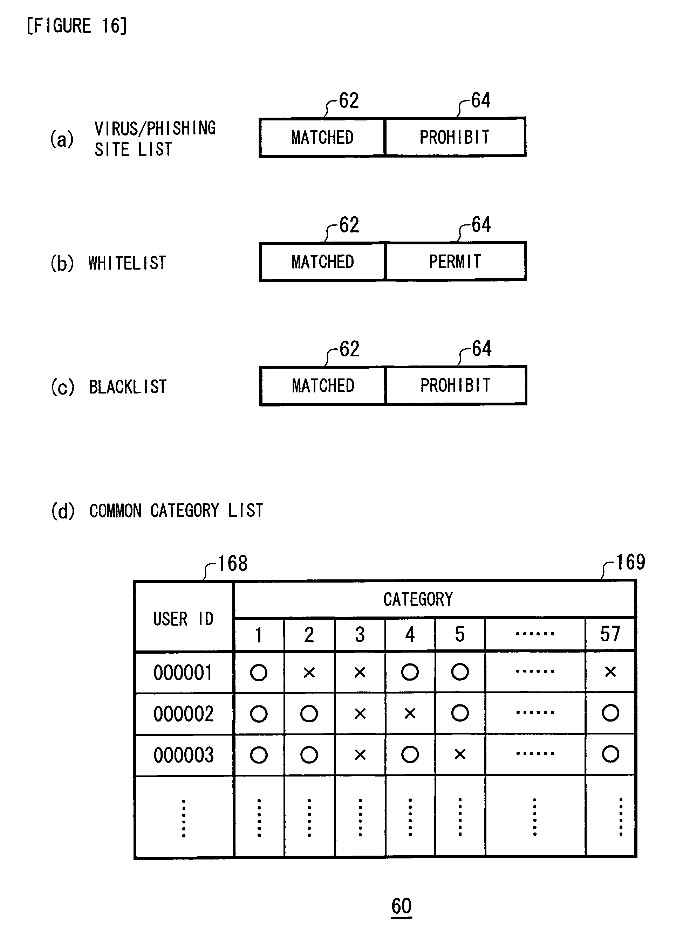

FIGS. 16A, 16B, 16C and 16D show examples of internal data of the second database 60 used for URL filtering. FIG. 16A shows the search result and processing content with respect to the virus/phishing site list 161. If a URL included in a GET request or the like matches a URL included in the virus/phishing site list 161, the access to the URL will be prohibited. FIG. 16B shows the search result and processing content with respect to the whitelist 162. If a URL included in a GET request or the like matches a URL included in the whitelist 162, the access to the URL will be permitted. FIG. 16C shows the search result and processing content with respect to the blacklist 163. If a URL included in a GET request or the like matches a URL included in the blacklist 163, the access to the URL will be prohibited.

FIG. 16D shows the search result and processing content with respect to the common category list 164. With respect to each of the categories, as shown in FIG. 16D, the permission or prohibition of the access to contents belonging to the category is determined, in relation to the results of search through the common category list 164. The second database 60 for the common category list 164 contains a category field 169. The category field 169 contains information that indicates the permission or prohibition of the access to contents belonging to each of the 57 categories classified. If a URL included in a GET request matches a URL included in the common category list 164, the permission for the access to the URL will be determined according to the category that the URL belongs to. Although the number of common categories is 57 in FIG. 16D, it is not limited thereto.

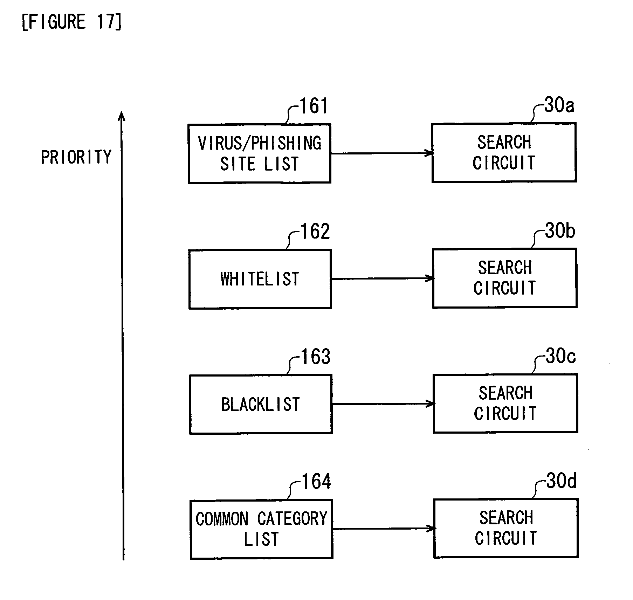

FIG. 17 shows the priorities of the virus/phishing site list 161, whitelist 162, blacklist 163 and common category list 164. In the present embodiment, the virus/phishing site list 161, whitelist 162, blacklist 163 and common category list 164 have higher priorities in this order. For example, even though a URL of a content appears in the whitelist 162 and the access thereto is permitted, the access will be prohibited if the URL also appears in the virus/phishing site list 161, as it is determined that the content contains a computer virus or is used for phishing.

When conventional software-based matching is performed in consideration of such priorities, the matching is performed on the lists, for example, in descending order of priority and the first match is employed. Alternatively, the matching is performed on lists in ascending order of priority, and the latest match is employed to replace the preceding match. In the base technology using the communication control apparatus 10 configured with a dedicated hardware circuit, in contrast, there are provided a search circuit 30a for performing matching with respect to the virus/phishing site list 161, a search circuit 30b for performing matching with respect to the whitelist 162, a search circuit 30c for performing matching with respect to the blacklist 163, and a search circuit 30d for performing matching with respect to the common category list 164; these search circuits 30 perform matching simultaneously in parallel. When matches are found in multiple lists, the one with the highest priority is employed. Thus, even when multiple databases are provided and the priorities thereof are defined, the search time can be reduced remarkably.

The priorities of the virus/phishing site list 161, whitelist 162, blacklist 163 and common category list 164, with which the permission of access is determined, may be provided in the second database 60, for example. The conditions in the second database 60 may be modified depending on the priorities of the lists.

Therefore, when performing filtering based on URLs using multiple databases, by defining priorities of the databases to perform filtering according thereto, and also by providing the highest priority to the filtering in the virus/phishing site list 161, access to a virus site or phishing site can be certainly prohibited, irrespective of the conditions in the whitelist 162 or the like defined by the user. This can appropriately protect users from viruses or phishing fraud.

When access to a content is permitted, the process execution circuit 40 outputs a signal to the message output server 130 to convey the permission. The message output server 130 then transmits a "GET" request message to the server retaining the content. When access to a content is prohibited, the process execution circuit 40 outputs a signal to the message output server 130 to convey the prohibition, and the message output server 130 then discards a "GET" request message for the server of access destination without transmitting it. At this time, a response message conveying the prohibition of the access may be transmitted to the request source. Alternatively, transfer to another web page may be forced. In this case, the process execution circuit 40 changes the destination address and URL to those of the transfer destination and transmits the "GET" request message. Information including such response message or URL of the transfer destination may be stored in the second database 60 or message output server 130.

The message output server 130 may confirm that the request source exists using a ping command or the like, and may subsequently check the condition of the request source before outputting a message thereto. A message transmitted from the message output server 130 to the request source may be determined for each content or each category of contents to be accessed, or for each database such as the whitelist 162 or blacklist 163. For example, the screen displayed when access is prohibited may be customized for each category and registered in the message output server 130. Also, as stated previously, when a valid website is hacked and the access thereto is temporarily restricted, there may be output a message for informing a user that the valid site cannot be viewed temporarily, or a message for directing a user to a mirror site of the valid site.

The message output server 130 may manage the history of message transmission so that the history information may be used for various kinds of control. For example, when a number of access requests are transmitted from the same request source for a short time, since it may possibly be a denial-of-service attack (DoS attack), such request source may be registered in an access denial list so as to block packets from the request source without transmitting them to the request destination. Also, the history of message transmission may be statistically processed to be provided to the operator of the website, etc. Accordingly, the history of user access can be used for marketing, control of communication status or other purposes. The number of message transmission may be decreased or increased depending on the situation. For example, when an access request is transmitted from a certain IP number, messages to be transmitted can be increased manyfold in response to the single request message.

With the configuration and operation as described above, access to an inappropriate content can be prohibited. Also, since the search circuit 30 is a dedicated hardware circuit configured with FPGA, etc., high-speed search processing can be achieved, as discussed previously, and filtering process can be performed with minimal effect on the traffic. By providing such filtering service, an Internet service provider can provide added value, thus gaining more users.

The communication control system 100 of the present embodiment is provided on a communication path connecting a user terminal, which transmits an access request, and an apparatus of access destination. In the following, illustrative arrangements of the communication control system 100 will be cited.

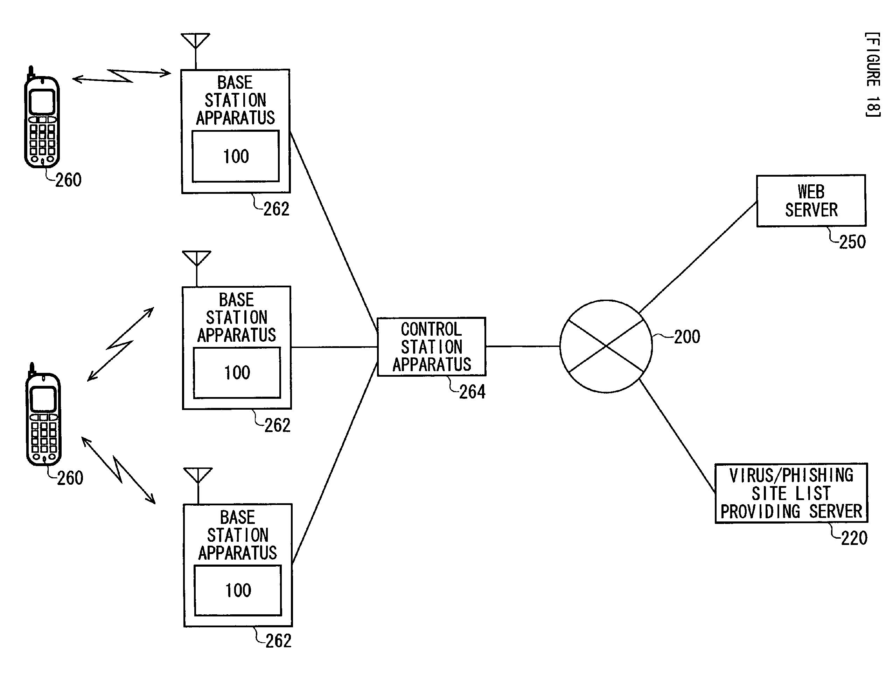

FIG. 18 shows an illustrative arrangement of the communication control system. This diagram shows an example in which cellular phone terminals 260 are used as user terminals. An access request is transmitted from a cellular phone terminal 260, via a base station apparatus 262 provided by a carrier and a control station apparatus 264 installed in a central office, to the Internet 200 and then reaches a web server 250. In the example of FIG. 18, the communication control system 100 is provided in the base station apparatus 262. In this case, the content of the first database 50 may be varied for each base station apparatus 262 so that different filtering is performed for an area covered by each base station apparatus 262. When the communication control system 100 is provided in the base station apparatus 262, the system may be miniaturized by installing only minimum required functions therein. For example, a configuration corresponding to the connection management server 120 or log management server 140 may be excluded. By providing the communication control system 100 in the base station apparatus 262, the filtering process can be distributed, and hence, the communication control system 100 can be made smaller. Consequently, the miniaturization, weight saving, and cost reduction of the apparatus can be achieved. Also, when an access request is transmitted from a cellular phone terminal 260, filtering can be performed before the access request is transmitted to the control station apparatus 264, thereby reducing the traffic. Further, since packet filtering is performed by the base station apparatus 262 which directly communicates with a cellular phone terminal 260, more reliable filtering can be performed. The virus/phishing site list 161 in the communication control system 100 installed in the base station apparatus 262 may be provided by a virus/phishing site list providing server 220 via the Internet 200 and control station apparatus 264.

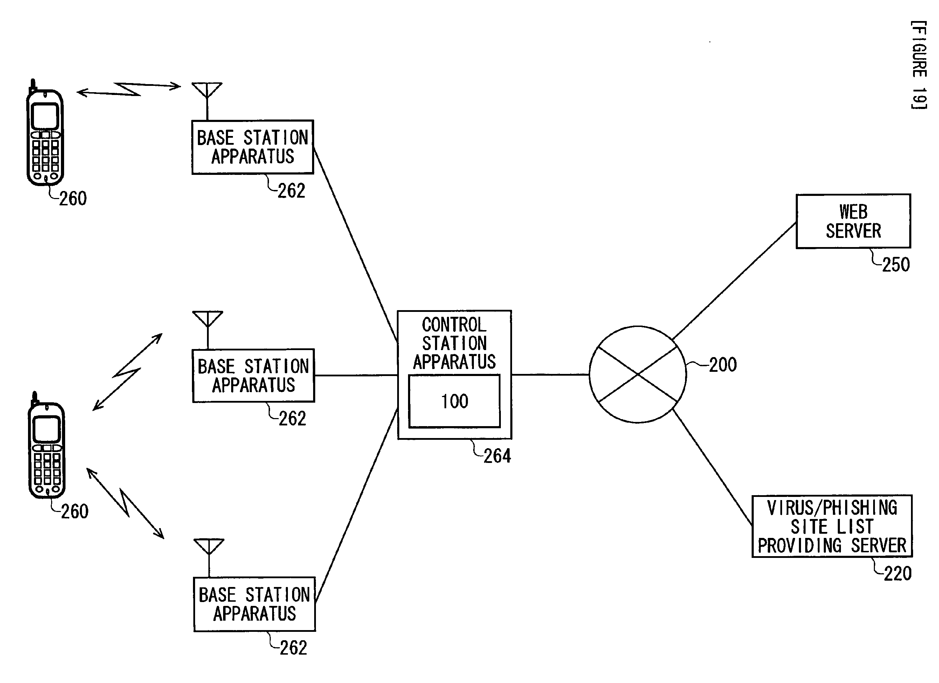

FIG. 19 shows another illustrative arrangement of the communication control system. This diagram also shows an example in which cellular phone terminals 260 are used but, unlike the example shown in FIG. 18, the communication control system 100 is provided in the control station apparatus 264. Since filtering is collectively performed by the control station apparatus 264 installed in the central office, system maintenance can be facilitated.

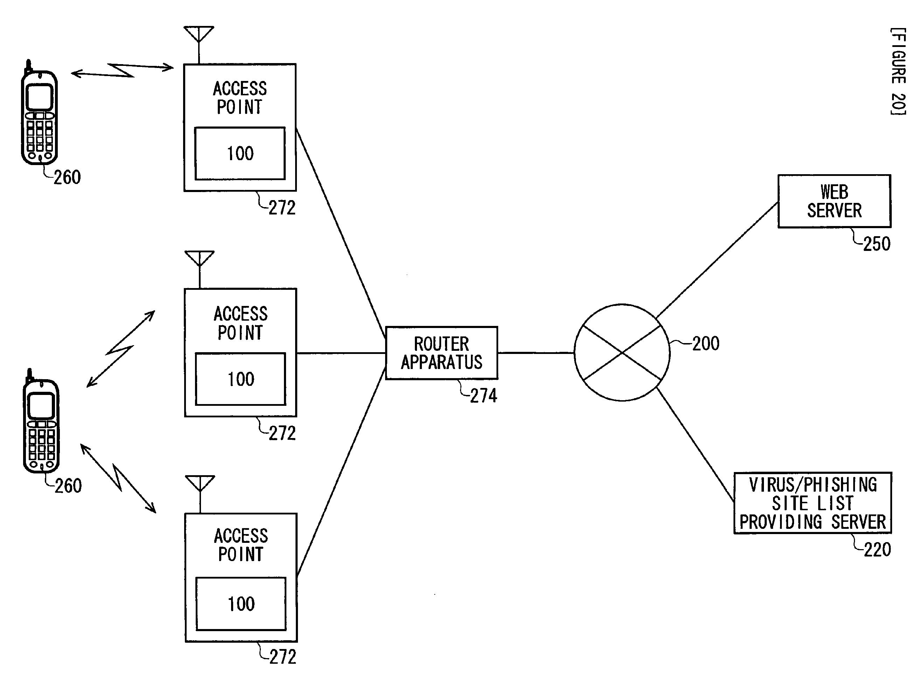

FIG. 20 shows yet another illustrative arrangement of the communication control system. Also in the example of this diagram, cellular phone terminals 260 are used as user terminals. An access request is transmitted from a cellular phone terminal 260, via an access point 272 in a wireless LAN and a router apparatus 274, to the Internet 200 and then reaches a web server 250. In the example of FIG. 20, the communication control system 100 is provided in the access point 272. Accordingly, as with the example shown in FIG. 18, packet filtering is performed by an apparatus near the cellular phone terminal 260, thereby reducing unnecessary communications. In a wireless LAN within a company, for example, employees' access to inappropriate websites may be prohibited during working hours.

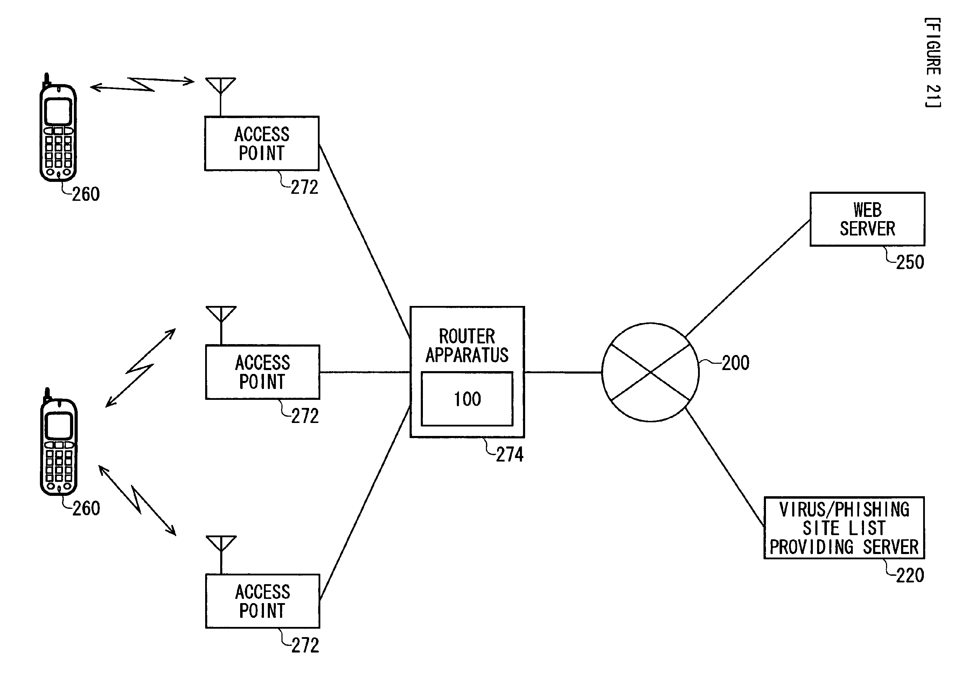

FIG. 21 shows still yet another illustrative arrangement of the communication control system. This diagram also shows an example of a wireless LAN but, unlike the example shown in FIG. 20, the communication control system 100 is provided in the router apparatus 274. By providing the communication control system 100 in the router apparatus 274, the number of the communication control systems 100 to be installed can be decreased, and hence, maintenance can be facilitated.

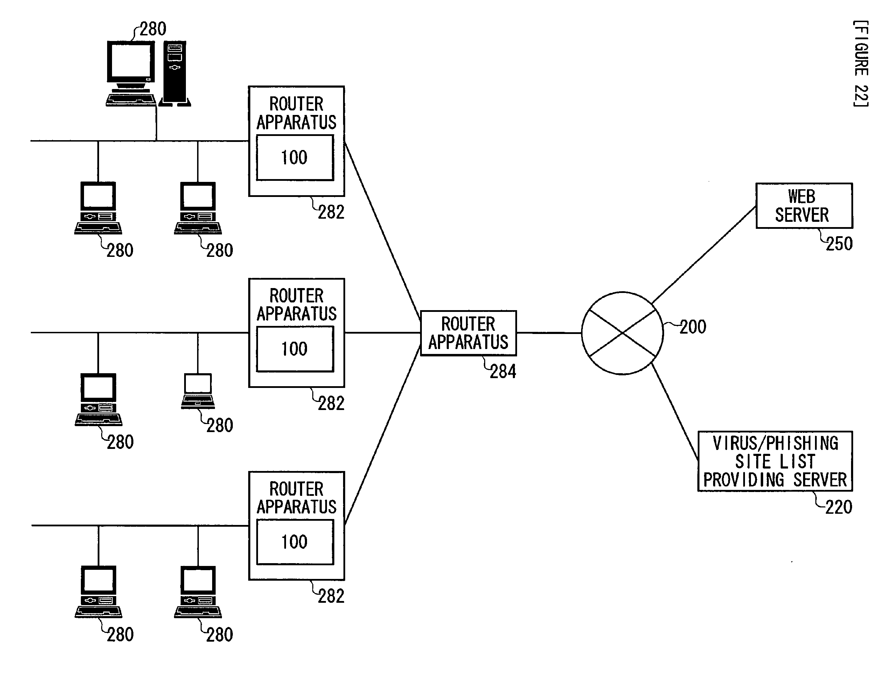

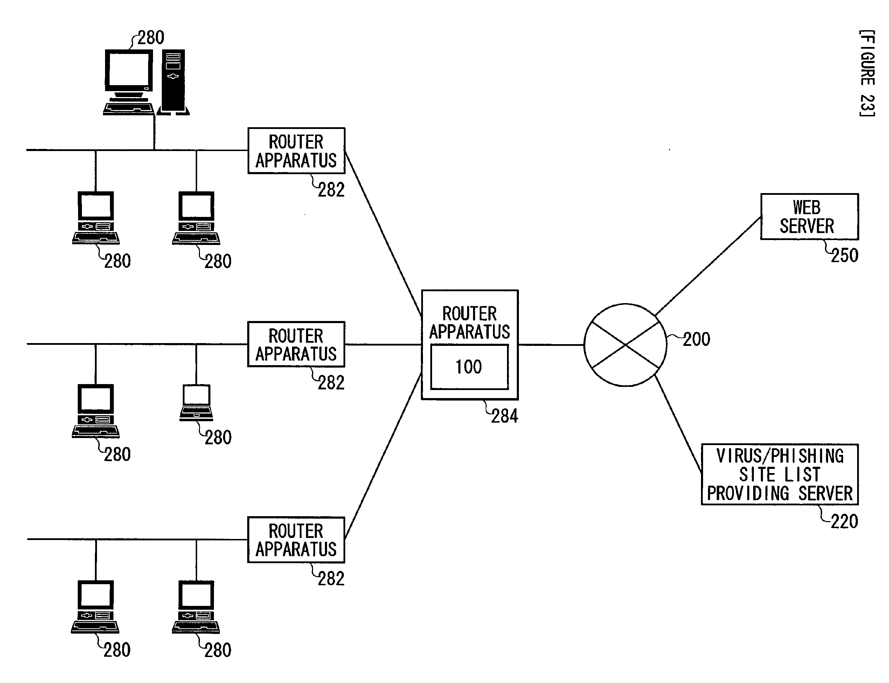

FIGS. 22 and 23 show further illustrative arrangements of the communication control system. These diagrams show examples in which personal computers (PCs) 280 are used as user terminals. An access request is transmitted from a PC 280, via router apparatuses 282 and 284 in a LAN, to the Internet 200 and then reaches a web server 250. FIG. 22 shows an example in which the communication control system 100 is provided in the router apparatus 282, while FIG. 23 shows an example in which the communication control system 100 is provided in the router apparatus 284.

Although the examples cited above show examples in which the communication control system 100 is built into apparatuses constituting a network, the communication control system 100 may be provided in any position in a network besides these apparatuses.

In the illustrative arrangements cited above, communication data received by a receiving unit, such as an antenna of the base station apparatus 262 or access point 272, or a network interface of the control station apparatus 264 or router apparatus 274, 282 or 284, may be processed by the packet processing circuit 20 without determining the need for access control thereof. In fact, the communication control system 100 may acquire all packets passing through and perform filtering thereon regardless of the need for access control of the received communication data. Also, the communication control system 100 may discard a packet to which access is to be prohibited, or may only record the log before retransmitting the packet to the network.

The embodiment above describes a case where filtering is performed on an access request transmitted from a user terminal. Since the communication control apparatus 10 can perform filtering in both directions, as shown in FIG. 12, the apparatus may perform filtering on a packet transmitted to a user terminal. In such case, whether or not the packet should be passed may be determined by comparing the address of the originator of the packet with a URL stored in the first database 50, so as to perform filtering not to transmit a packet from a virus site or phishing site to a user terminal. Thus, packets transmitted from dangerous websites can be appropriately filtered, thereby improving the security of user terminals.

In the present embodiment, a list of virus sites and phishing sites are acquired to prohibit access to web pages that match the list. Conversely, a list of websites certified by certificate authorities may be acquired as a whitelist, so as to prohibit access to websites that do not match the list.

The present invention has been described with reference to the embodiment. The embodiment is intended to be illustrative only and it will be obvious to those skilled in the art that various modifications to constituting elements or processes could be developed and that such modifications are also within the scope of the present invention.

### [Industrial Applicability]

The present invention is applicable to a communication control system that controls access to illegal websites including phishing sites.

## Claims

1. A communication control apparatus, comprising:
a maintaining unit which maintains a list containing an address of a web page to which access should be restricted;
a receiving unit which receives, via a network, communication data for requesting access to a content;
a comparison unit which compares the address of the content included in the communication data, with the address of the web page to which access should be restricted included in the list; and
an access control unit which prohibits access to the content when the address of the content matches the address of the web page to which access should be restricted,
wherein
communication data received by the receiving unit is processed by the comparison unit and the access control unit without the need for access control thereof being determined.

2. The communication control apparatus of claim 1, wherein the web page to which access should be restricted is a web page in a phishing site, which masquerades as a valid website and comprises an interface for prompting a user to enter information.

3. The communication control apparatus of claim 1 or 2,
wherein:
the receiving unit further receives communication data to be transmitted to the request source of the access;
the comparison unit compares an address of a content included in the communication data, with an address of a web page to which access should be restricted included in the list; and
the access control unit prohibits the transmission of the communication data to the request source when the address of the content matches the address of the web page to which access should be restricted.

4. The communication control apparatus of any one of claims 1 through 3, wherein the receiving unit is an antenna for transmitting to or receiving from a mobile communication terminal a signal via wireless communication.
